# EUROPEAN PATENT APPLICATION

(11) **EP 3 272 701 A1**
(43) Date of publication of application: **24.01.2018**
(21) Application number: 17177910.1
(22) Date of filing: 26.06.2017
(51) Int. Cl.: B67C 3/28, F16K 5/16, B65B 39/00

(54) **DEVICE FOR FILLING INHOMOGENEOUS PRODUCTS**

(30) Priority: 19.07.2016 IT 201600075547
(71) Applicant: Weightpack S.r.l., 46044 Goito (Mantova) (IT)
(72) Inventor: ZACCHE', Vanni, I-46044 Goito, MANTOVA (IT)
(74) Representative: Long, Giorgio

(57) **Abstract**

The present invention relates to a filling device for inhomogeneous products or products which have solid or semisolid elements of variable size and compactness in suspensions. The valve of the invention can be used in net weight filling machines.

In particular, the invention relates to a filling device (1) for filling machines comprising a hollow body (2) in which a delivery member is movably inserted, wherein the hollow body (2) comprises a lower portion (2a) comprising a delivery duct (10) which ends with a delivery opening (2b), said lower portion (2a) being intercepted by a cone-shaped rotating shutter (3), comprising a major base (3a), a minor base (3b) and a through hole (4) which is aligned with the delivery duct (10) when the filling device (1) delivers a product, **characterized in that** the minor base (3b) of the rotating shutter (3) is associated with a drawing system which applies a constant and predetermined drawing force on said minor base (3b).

## Description

The present invention relates to a filling device for inhomogeneous products or products which have solid or semisolid elements of variable size and compactness in suspension. The valve of the invention can be used in net weight filling machines.

The use of weight filling systems with inhomogeneous products or products which have solid or semisolid elements of variable size and compactness in suspension is rather problematic.

The known weight filling methods are all characterized by filling valves connected either to a tank or to a manifold and the opening/closing dynamic of the valve depends on the weight measuring strategy of the delivered product. The release of the product from the valves is promoted by the pressure, determined either by the geodesic head of the product itself or by a slight pressurization (a few meters of water column at most) of the tank or of the manifold which supplies the product to the valves.

Inhomogeneous products, in addition to needing to be constantly mixed to avoid the layering of the solid parts due to the difference of density, have the problem that some pieces tend to aggregate near the outlet of the valves, compromising the correct filling strategy.

In order to guarantee continuity of this operation, a pressurization regime which is incompatible with the weight measuring systems, but is typical of volumetric filling systems must be applied to the product. This type of method is based on volumetric piston systems.

There are various types of volumetric piston valves, according to whether the delivery opening is closed by a shutter with linear movement or whether a rotating valve is provided.

This second type of valve normally provides the arrangement of a cone-shaped rotating shutter. This shape allows a better coupling with the housing in which it must rotate and also a better sealing in case of thermal deformation of the material.

The cone-shaped shutters of these type of valves are typically held in their operating position, in coupling with the respective housing, by a preloaded spring. However, a drawback relative to the use of this valve has been found, because it is subject to thermal deformation, which results in an altered sealing pressure (either higher or lower depending on the case) and thus also to a different friction between the surfaces of the shutter and that of its housing. Since the actuation of such cone-shaped shutter is normally of the pneumatic type, thus with constant load, a variation of friction between the concerned surfaces translates into a different rotation speed of the cone-shaped shutter with respect to the desired speed. This constitutes a problem because the constant delivery is altered in a manner which is difficult to predict.

The problem addressed by the present invention is thus to provide a filling device which solves the problems inherent to the devices of the prior art, allowing an accurate and efficient filling.

Such a problem is solved by a filling machine as outlined in the accompanying claims, the definitions of which form an integral part of the present description.

Further features and advantages of the present invention will be apparent from the description of some examples of embodiment, given here by way of non-limiting example with reference to the following figures:
Figure 1 is a perspective sectional view of the filling device of the invention;
Figure 2 is a perspective view of the device in figure 1 according to a different angle;
Figure 3 is a perspective view of a detail of the device in figure 1;
Figure 4 is a perspective sectional view of the filling device of the invention according to a different embodiment.

With reference to the figures, the filling device of the invention, indicated by reference numeral 1, comprises a hollow body 2, in which a delivery member (not shown) is inserted, e.g. an auger member, as described for example in Italian patent application N. 102015000069398 dated 5 November 2015. The hollow body 2 is connected to a tank containing the product to be delivered, which will be typically introduced into the upper portion of the hollow body 2.

The filling device 1 is inserted in a filling machine (not shown) of linear or rotary type, in which a plurality of filling devices operate in sequence. Each filling device 1 is operatively connected to a single drive, such as for example either a synchronous or an asynchronous motor, by means of appropriate motion transmission systems, or may be operated by its own motor, e.g. a stepper motor or a brushless motor.

In a weight filling machine, the container is supported by a plate operatively arranged on a loading cell for weighing the empty and full container. However, these machines are known and will not be described in further detail.

The hollow body 2 comprises a lower portion 2a comprising a delivery duct 10 having narrow section with respect to the cavity of the hollow body 2 and which ends with a delivery opening 2b.

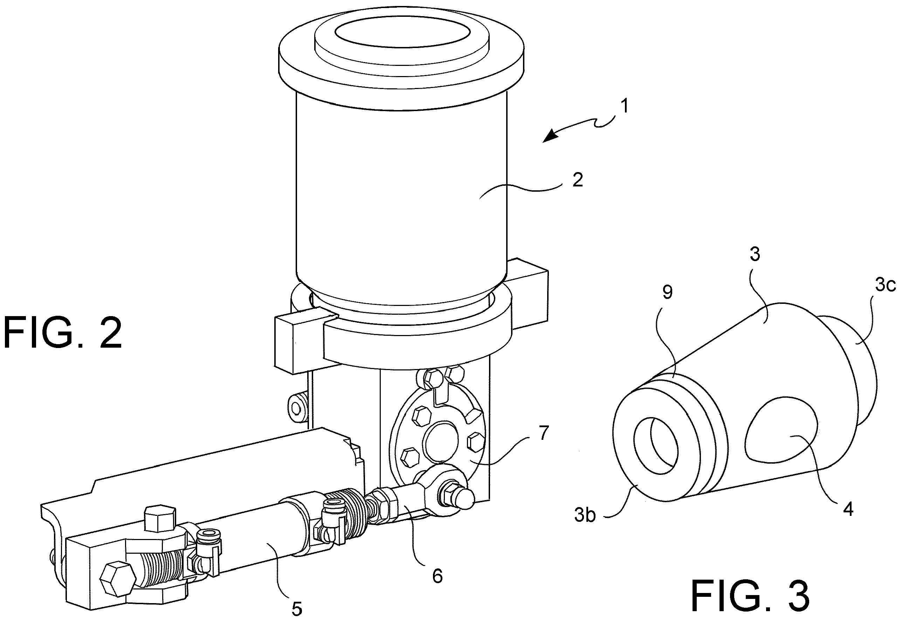

The lower portion 2a is intercepted by a rotating shutter 3. As also shown in figure 3, the rotating shutter 3 is cone-shaped and comprises a major base 3a, a minor base 3b and a through hole 4 arranged transversally with respect to the main axis of the shutter 3.

A cylindrical portion 3c protrudes centrally from the major base 3a of the rotating shutter 3.

The rotating shutter 3 is rotationally housed in a complementary shaped housing and is moved by an actuator member 5. The outer surface of the rotating shutter 3 comprises an annular housing in which a sealing ring 9 is housed.

In some embodiments, the actuator member 5 is a linear actuator, preferably a pneumatic actuator. The cylinder of the pneumatic actuator is connected, by means of a connecting rod 6, to a cam member 7. The cam member 7 is integral in rotation with the rotating shutter 3 and is connected to it by means of the cylindrical portion 3c, which thus forms a connection and fixing portion of the rotating shutter 3. In this manner, the rotating shutter 3 may assume an opening position (shown in figure 2), in which the through hole 4 is aligned with the delivery duct 10, and a closing position, in which the through hole 4 is completely misaligned with the delivery duct 10, e.g. assumes a transversal position, preventing the passage of the product.

The rotating shutter 3 comprises preloading means adapted to keep it pressed against its housing with constant load, in which such preloading means are different from a preloaded spring and comprise a drawing system at the minor base 3b of the rotating shutter 3.

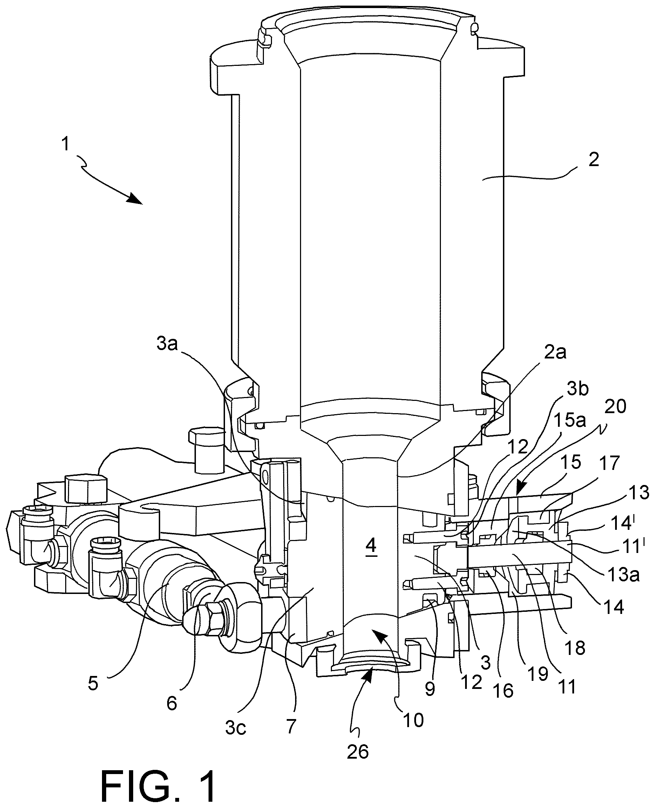

In some embodiments, as shown in figure 1, the drawing system comprises a pin 11 fixed to the minor base 3b of the rotating shutter 3, e.g. by means of screws 12. A piston 13 is coupled to the distal end 11' of the pin 11. The piston 13 is withheld axially by appropriate stop rings 14, 14' (e.g. a washer and a snap ring), while the pin 11 can rotate integrally with the rotating shutter 3.

The piston 13 is axially movable inside a cylinder 15. The cylinder 15 comprises a sealing portion 15a, comprising a hole of diameter substantially corresponding to the diameter of the pin 11 and in which the pin 11 itself slides. The hole of the sealing portion 15a comprises a housing for a sealing ring 16.

The piston 13 comprises an outer sealing ring 17, which ensures the sealing against the wall of the cylinder 15, and an inner sealing ring 18, which ensures the sealing against the surface of the pin 11.

A chamber 19 is arranged between the sealing portion 15a of the cylinder 15 and the inner face 13a of the piston 13, the chamber 19 comprising an inlet opening 20 of a pressurized fluid, e.g. compressed air. The pressurized fluid is introduced by means of an appropriate piping (not shown).

The pressurized fluid has a constant predetermined pressure as a function of the desired positioning load of the rotating shutter 3 in its housing. The pressurized fluid thus acts on the piston 13 with constant load, consequently applying a constant drawing load on the minor base 3b of the rotating shutter 3, by virtue of the operative connection of the piston 13 with the rotating shutter 3 via the pin 11.

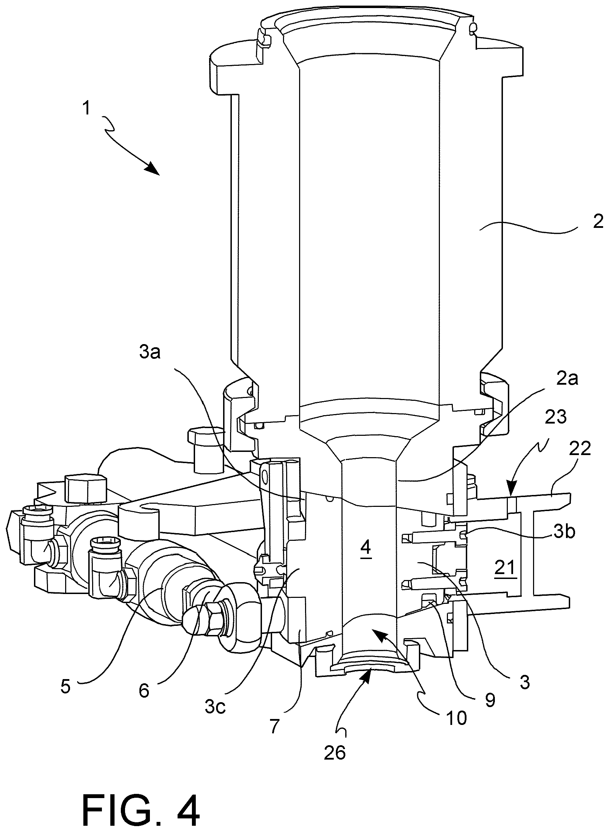

In other embodiments, shown in figure 4, the drawing system comprises a hollow element 22 comprising a vacuum chamber 21, which the minor base 3b of the rotating shutter 3 faces.

The vacuum chamber 21 comprises an opening 23 connected, by means of an appropriate piping (not shown), to vacuum means. The applied vacuum is constant and predetermined as a function of the desired positioning load of the rotating shutter 3 in its housing. In this case, the vacuum directly applies a constant drawing force on the minor base 3b of the rotating shutter 3.

The advantages of the present invention are apparent from the description above.

While the preloaded spring traditionally used in the valves of this type is subject to a variation of the preload caused by the thermal expansions of the material of which it is made, the preloading means according to the invention, i.e. the drawing system made by vacuum pressurization at constant pressure, are potentially independent from the thermal expansions, with the result that the load of the shutter on the surface of its housing, and thus also the respective friction, remains constant in all operating conditions of the valve.

It is apparent that only some particular embodiments of the present invention have been described, to which a person skilled in the art will be able to make all the changes necessary to adapt it to particular applications, without however departing from the scope of protection of the present invention.

## Claims

1. Filling device (1) for filling machines comprising a hollow body (2) in which a delivery member is movably inserted, wherein the hollow body (2) comprises a lower portion (2a) comprising a delivery duct (10) that ends with a delivery opening (2b), said lower portion (2a) being intercepted by a cone-shaped rotating shutter (3), comprising a major base (3a), a minor base (3b) and a through hole (4) aligned with the delivery duct (10) when the filling device (1) delivers a product, **characterized in that** the minor base (3b) of the rotating shutter (3) is associated with a drawing system that applies a drawing force that is constant and predetermined to said minor base (3b).

2. Device (1) according to claim 1, wherein the filling device (1) is inserted in a net weight filling machine of the linear or rotary type.

3. Device (1) according to claim 1 or 2, wherein the rotating shutter (3) is set in motion by an actuator member (5).

4. Device (1) according to claim 3, wherein the actuator member (5) is a linear actuator or a pneumatic actuator.

5. Device (1) according to any one of claims 1 to 4, wherein the drawing system comprises pressurizing means acting on a piston (13) for pulling the minor base (3b) of the rotating shutter (3).

6. Device (1) according to claim 5, wherein the drawing system comprises a pin (11) fixed to the minor base (3b) of the rotating shutter (3), the piston (13) being coupled at the distal end (11') of the pin (11), wherein the piston (13) is axially movable within a cylinder (15) comprising a sealing portion (15a) in which the pin (11) slides, between the sealing portion (15a) and the inner face (13a) of the piston (13) being arranged a chamber (19) comprising an inlet opening (20) of a pressurized fluid, for example compressed air, at constant and predetermined pressure.

7. Device (1) according to claim 6, wherein the piston (13) is axially retained by stop rings (14, 14'), while allowing the pin (11) to rotate integrally with the rotating shutter (3).

8. Device (1) according to any one of claims 1 to 4, wherein the drawing system comprises a hollow element (22) comprising a vacuum chamber (21) onto which the minor base (3b) of the rotating shutter (3) overlooks, wherein the vacuum chamber (21) comprises an opening (23) connected to vacuum means, wherein the applied vacuum is constant and predetermined.
